# EUROPEAN PATENT APPLICATION

(11) **EP 4 436 156 A1**
(43) Date of publication of application: **25.09.2024**
(21) Application number: 23192068.7
(22) Date of filing: 18.08.2023
(51) Int. Cl.: H04N 1/00, G06F 3/12

(54) **INFORMATION PROCESSING SYSTEM, PROGRAM, AND INFORMATION PROCESSING METHOD**

(30) Priority: 22.03.2023 JP 2023045963
(71) Applicant: FUJIFILM Business Innovation Corp., Minato-ku Tokyo (JP)
(72) Inventor: KAWABE, Masatake, Yokohama-shi, Kanagawa (JP); NOGUCHI, Daisuke, Yokohama-shi, Kanagawa (JP); YAMAGUCHI, Megumi, Yokohama-shi, Kanagawa (JP); NAKAYAMA, Hiroyoshi, Yokohama-shi, Kanagawa (JP)
(74) Representative: Kurig, Thomas

(57) **Abstract**

An information processing system includes a processor configured to acquire information related to a printed matter, and create an inspection setting, based on setting basic information including the information related to the printed matter, such that a high level region, which is a region including a portion that is used as a final product, is inspected with higher accuracy than a low level region which is the other region.

## Description

### BACKGROUND OF THE INVENTION

### (i) Field of the Invention

The present invention relates to an information processing system, a program, and an information processing method.

### (ii) Description of Related Art

In JP2001-277676A, a printed matter inspection device is disclosed. This printed matter inspection device enables automatic inspection of all print results for pre-set items to ensure complete assurance of print data.

In JP2020-040346A, an image forming apparatus is disclosed. This image forming apparatus includes an image forming unit that forms an image on a transported paper, a scanner unit that reads the paper on which an image is formed by the image forming unit, an inspection unit that performs an inspection by analyzing the image read by the scanner unit, and a control unit that controls the inspection in the inspection unit and executes an inspection different from the first inspection in a case where the inspection in the inspection unit is a re-inspection of the paper that has already been inspected.

### SUMMARY OF THE INVENTION

By the way, in an inspection of a printed matter, it is ideal to inspect the entire printed matter (the entire surface of a page) with high accuracy.

However, inspecting the entire printed matter with high accuracy increases an inspection cost.

An object of the present invention is to provide an information processing system, a program, and an information processing method capable of reducing an inspection cost while suppressing a decrease in an inspection effect as compared with an aspect of inspecting an entire printed matter with high accuracy.

According to a first aspect of the present disclosure, there is provided an information processing system including a processor configured to acquire information related to a printed matter, and create an inspection setting, based on setting basic information including the information related to the printed matter, such that a high level region, which is a region including a portion that is used as a final product, is inspected with higher accuracy than a low level region which is the other region.

According to a second aspect of the present disclosure, there is provided the information processing system according to the first aspect, in which the processor may be configured to acquire information for manufacturing the printed matter.

According to a third aspect of the present disclosure, there is provided the information processing system according to the first or second aspect, in which the setting basic information may include information for manufacturing the printed matter.

According to a fourth aspect of the present disclosure, there is provided the information processing system according to any one of the first to third aspects, in which the high level region may be a region having an outer edge along an outer edge of the portion that is used as the final product.

According to a fifth aspect of the present disclosure, there is provided the information processing system according to any one of the first to third aspects, in which the high level region may be a rectangular region including an entire portion that is used as the final product.

According to a sixth aspect of the present disclosure, there is provided the information processing system according to any one of the first to fifth aspects, in which the inspection setting may be a setting such that a first high level region, which is a region including a particularly crucial portion of the portion that is used as the final product of the high level region, is inspected with higher accuracy than a second high level region, which is the other region of the high level region.

According to a seventh aspect of the present disclosure, there is provided the information processing system according to the sixth aspect, in which the first high level region may be a region having an outer edge along an outer edge of the particularly crucial portion of the portion that is used as the final product.

According to an eighth aspect of the present disclosure, there is provided the information processing system according to the sixth aspect, in which the first high level region may be a rectangular region including an entire particularly crucial portion of the portion that is used as the final product.

According to a ninth aspect of the present disclosure, there is provided the information processing system according to any one of the first to third aspects, in which in the creation of the inspection setting, a final product related to the printed matter may be specified, and in a case where the final product is a sticker, a determination may be made that an inner portion of a slit in the printed matter is the portion that is used as the final product, and that an outer portion of the slit is a portion that is not used as the final product.

According to a tenth aspect of the present disclosure, there is provided the information processing system according to the ninth aspect, in which the inspection setting may be a setting such that a first high level region, which is a region including a particularly crucial portion of the portion that is used as the final product of the high level region, is inspected with higher accuracy than a second high level region, which is the other region of the high level region, and in the creation of the inspection setting, in a case where the final product is a sticker and in a case where the inner portion of the slit in the printed matter includes a portion in which an image is formed and a portion in which the image is not formed, a determination may be made that the portion in which the image is formed is the particularly crucial portion.

According to an eleventh aspect of the present disclosure, there is provided the information processing system according to any one of the first to tenth aspects, in which the processor may be configured to receive input of information for manufacturing the printed matter, manufacture the printed matter based on the information for manufacturing the printed matter, and inspect the manufactured printed matter based on the created inspection setting.

According to a twelfth aspect of the present disclosure, there is provided a program for causing a processor to execute a process including acquiring information related to a printed matter, and creating an inspection setting, based on setting basic information including the information related to the printed matter, such that a high level region, which is a region including a portion that is used as a final product, is inspected with higher accuracy than a low level region which is the other region.

According to a thirteenth aspect of the present disclosure, there is provided an information processing method including acquiring information related to a printed matter, and creating an inspection setting, based on setting basic information including the information related to the printed matter, such that a high level region, which is a region including a portion that is used as a final product, is inspected with higher accuracy than a low level region which is the other region.

With the first aspect, it is possible to reduce an inspection cost while suppressing a decrease in an inspection effect as compared with an aspect of inspecting the entire printed matter with high accuracy.

With the second aspect, the setting basic information can include information for manufacturing the printed matter.

With the third aspect, it is easy to create the inspection setting as compared with a case where the setting basic information includes only the information obtained from the manufactured printed matter.

With the fourth aspect, it is possible to increase an area of the low level region as compared with a case where the high level region is a rectangular region including the entire portion that is used as the final product.

With the fifth aspect, it is possible to simplify the inspection method as compared with a case where the high level region is a region having an outer edge along the outer edge of the portion that is used as the final product.

With the sixth aspect, it is possible to reduce the inspection cost while suppressing a decrease in the inspection effect as compared with a case of inspecting the entire high level region with the same accuracy.

With the seventh aspect, it is possible to increase an area of the second high level region as compared with a case where the first high level region is a rectangular region including the entire particularly crucial portion of the portion that is used as the final product.

With the eighth aspect, it is possible to simplify the inspection method as compared with a case where the first high level region is a region having an outer edge along an outer edge of the particularly crucial portion of the portion that is used as the final product.

With the ninth aspect, in a case where the final product related to the printed matter is a sticker, it is possible to create the inspection setting with the slit as a reference.

With the tenth aspect, in a case where the final product related to the printed matter is a sticker, it is possible to further reduce the inspection cost.

With the eleventh aspect, it is possible to manufacture and inspect the printed matter by the information processing system.

With the twelfth aspect, it is possible to reduce an inspection cost while suppressing a decrease in an inspection effect as compared with an aspect of inspecting the entire printed matter with high accuracy.

With the thirteenth aspect, it is possible to reduce an inspection cost while suppressing a decrease in an inspection effect as compared with an aspect of inspecting the entire printed matter with high accuracy.

### BRIEF DESCRIPTION OF THE DRAWINGS

Exemplary embodiment(s) of the present invention will be described in detail based on the following figures, wherein:
Fig. 1A shows a completed state of a printed matter, and Fig. 1B shows an inspection setting corresponding to the completed state;
Fig. 2A shows a completed state of a printed matter, and Fig. 2B shows an inspection setting corresponding to the completed state;
Fig. 3A shows a completed state of a printed matter, and Fig. 3B shows an inspection setting corresponding to the completed state;
Fig. 4A shows a completed state of a printed matter, and Fig. 4B shows an inspection setting corresponding to the completed state;
Fig. 5 is a flowchart showing an example of processing of an image forming apparatus;
Fig. 6 is a flowchart showing a procedure to create an inspection setting; and
Fig. 7 is a diagram showing a schematic configuration of an image forming apparatus that is an exemplary embodiment of an information processing system of the present invention.

### DETAILED DESCRIPTION OF THE INVENTION

Hereinafter, an exemplary embodiment of an information processing system of the present invention will be described.

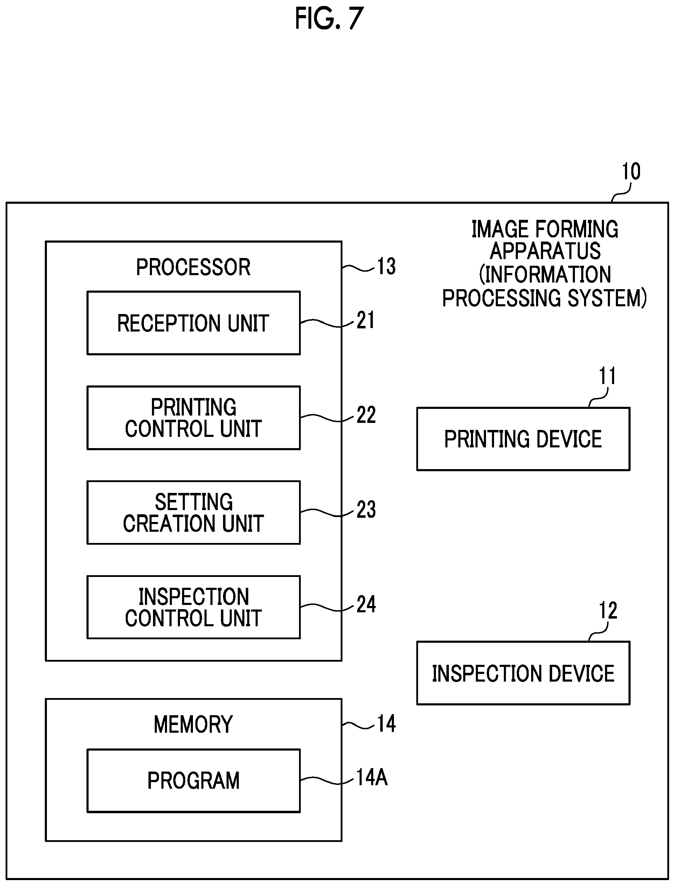

In the present exemplary embodiment, an example of the information processing system is realized as an image forming apparatus 10 with an inspection function. Fig. 7 is a schematic diagram of the image forming apparatus 10 according to the present exemplary embodiment.

The image forming apparatus 10 is an apparatus that receives an input by a user, manufactures a printed matter 30 corresponding to the input, and further inspects the printed matter 30.

The image forming apparatus 10 includes a printing device 11, an inspection device 12, a processor 13, a memory 14, and the like. Printing and inspection are performed by controlling the printing device 11 and the inspection device 12 by the processor 13.

Specifically, the processor 13 reads and executes a program 14A stored in the memory 14, so that the processor 13 functions as a reception unit 21, a printing control unit 22, a setting creation unit 23, an inspection control unit 24, and the like.

The reception unit 21 receives the input by the user.

The printing control unit 22 executes printing by controlling the printing device 11 based on the input.

The setting creation unit 23 creates an inspection setting for inspection by the inspection device 12.

The inspection control unit 24 executes the inspection by controlling the inspection device 12 based on the created inspection setting.

In addition, the image forming apparatus 10 has a transport device that transports a recording medium (paper or the like). The transport device transports the recording medium to the printing device 11 and also transports the printed recording medium (printed matter 30) to the inspection device 12.

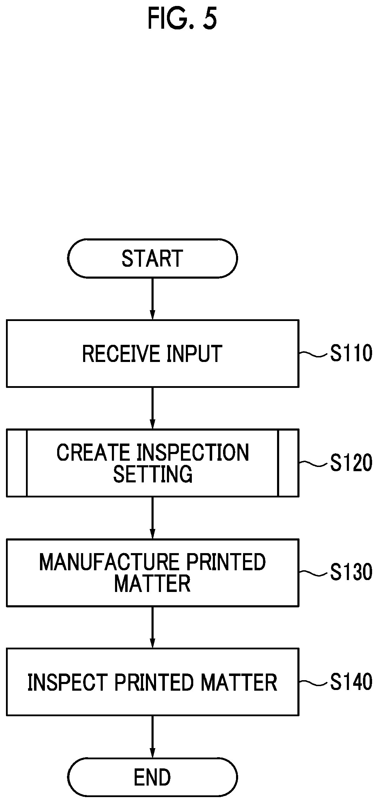

Fig. 5 is a diagram showing an example of the processing of the image forming apparatus 10.

In step S110, the image forming apparatus 10 functions as the reception unit 21 and receives the input by the user.

Reception of input is performed, for example, by displaying an input screen on a display device of the image forming apparatus 10 or a display device of a terminal connected to the image forming apparatus 10, and receiving operation of the workflow setting and the job setting by the user. Here, the workflow setting is a setting regarding what kind of workflow is to be executed, and specifically, is a setting of a plurality of types of processing and the order. The processing included in the workflow includes, for example, printing, die cutting, slit formation, bookbinding, and the like. In addition, the input here includes an input of image data to be printed on a recording medium. The image data has, for example, a PDF file format.

In step S120, the image forming apparatus 10 functions as the setting creation unit 23 and creates the inspection setting.

Since the creation of the inspection setting may be performed before the inspection of the printed matter in step S140, the creation of the inspection setting may be performed after the manufacturing of the printed matter in step S130. In addition, in a case of manufacturing a plurality of identical or similar types of printed matter in the manufacture of the printed matter, one inspection setting may be used for a plurality of identical or similar types of manufactured matter.

The details of the inspection setting and a method of creating the inspection setting will be described later.

In step S130, the image forming apparatus 10 functions as the printing control unit 22 and manufactures a printed matter based on the input.

The manufacture of the printed matter refers to executing printing on a recording medium and manufacturing a printed recording medium.

In step S140, the image forming apparatus 10 functions as the inspection control unit 24 and inspects the manufactured printed matter based on the inspection setting.

The inspection of the printed matter is performed, for example, by scanning the printed matter with a scanner provided in the inspection device 12 and comparing the scanned image with a correct image. The correct image is separately created based on the input in step S110. However, the inspection of the printed matter in the present invention is not limited to this and may be performed by other methods.

### (Inspection Method)

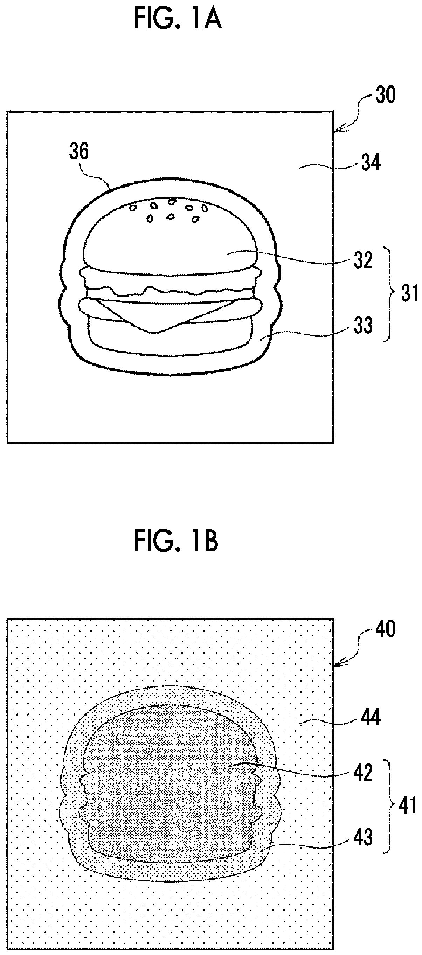

Next, an inspection method performed by the inspection device 12 will be described with reference to Figs. 1A to 4B.

Fig. 1A shows an example of a completed state of the printed matter 30.

The final product of the printed matter 30 shown in Fig. 1A is a sticker, and the outline of the final product is not a rectangular shape but a free shape. Specifically, a slit 36 is formed on the printed matter 30. An inner portion 31 of the slit 36 is separated from an outer portion 34 of the slit 36 by the slit 36. The inner portion 31 of the slit 36 is a portion 31 that is used as a final product, and the outer portion 34 of the slit 36 is a portion 34 that is not used as a final product.

However, the slit 36 may not be formed at the time of inspecting the printed matter 30. Even in this case, a virtual outline 36 of the sticker as the final product is assumed at the time of inspecting the printed matter 30.

Here, it can be said that the portion 31 that is used as the final product is a portion that should be inspected more carefully than the portion 34 that is not used.

Therefore, in the present exemplary embodiment, as shown in Fig. 1B, a printed matter region 40 is divided into a high level region 41 that is a region including the portion 31 that is used as a final product, and a low level region 44 that is the other region. Then, the high level region 41 is inspected with higher accuracy than the low level region 44.

Regarding the accuracy of the inspection, "high" means, for example, that there are many inspection points per area, that there are many inspection items (color tint, blurring, color shift, and the like), and the like.

Furthermore, as shown in Fig. 1A, the inner portion 31 of the slit 36 can be divided into a portion 32 in which the image of the hamburger is printed and a portion 33 in which the image of the hamburger is not printed.

Here, it can be said that a portion 32 in which the image is printed is a portion to be inspected more carefully than a portion 33 in which the image is not printed.

Therefore, in the present exemplary embodiment, as shown in Fig. 1B, the high level region 41 is divided into a first high level region 42 which is a region including a particularly crucial portion 32 of the portion 31 that is used as the final product and a second high level region 43 which is the other region. Then, the first high level region 42 is inspected with higher accuracy than the second high level region 43.

In a low level region 44, the inspection may not be performed. That is, the inspection settings of the present disclosure include inspection settings for preventing the inspection from being performed in the low level region 44.

In the example shown in Fig. 1B, the high level region 41 is a region having an outer edge along an outer edge (outline) of the portion 31 that is used as the final product. Specifically, the high level region 41 is a region having an outer edge along the slit 36.

In addition, the first high level region 42 is also a region having an outer edge along an outer edge of a particularly crucial portion of the portion that is used as the final product. Specifically, the first high level region 42 is also a region having an outer edge along the outer edge of the portion 32 in which the image is printed.

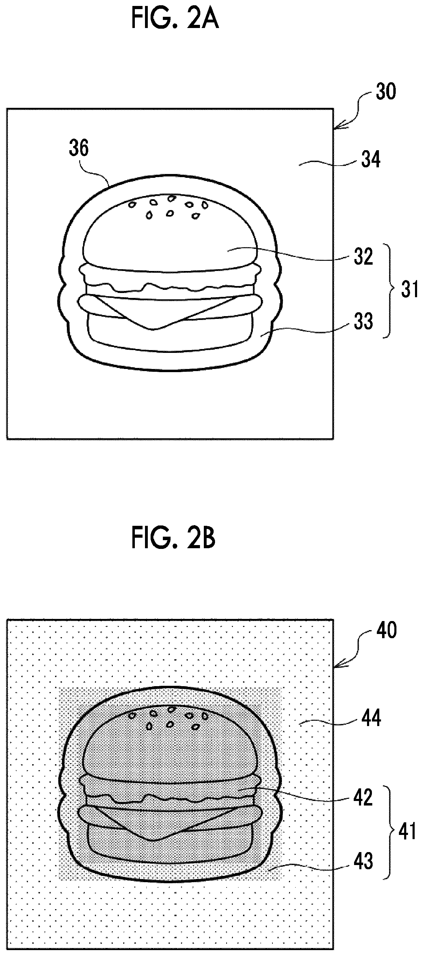

However, depending on the performance of the inspection device 12 and other circumstances, it is considered that the high level region 41 and the first high level region 42 cannot be formed freely. In such a case, the high level region 41 and the first high level region 42 may be set as shown in Fig. 2B.

In the example shown in Fig. 2B, the high level region 41 and the first high level region 42 are both rectangular regions. Specifically, the high level region 41 is a rectangular region including the entire portion 31 that is used as the final product. In addition, the first high level region 42 is a rectangular region including the entire particularly crucial portion 32 of the portion 31 that is used as the final product.

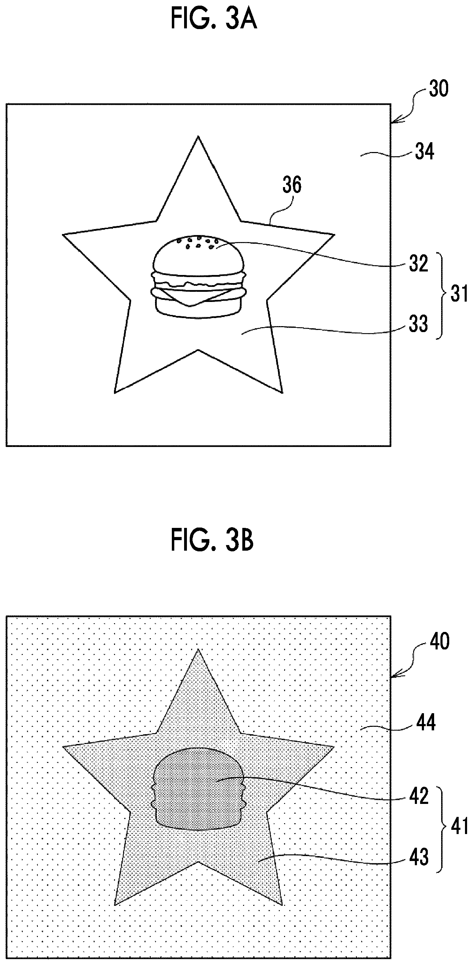

In Figs. 1A to 2B, the outline of the final product is similar to the outline of the printed image. However, as shown in Fig. 3A, the outline of the final product may not be similar to the outline of the printed image. In this case, the inspection method is the same as described above, and specifically, the inspection setting is as shown in Fig. 3B.

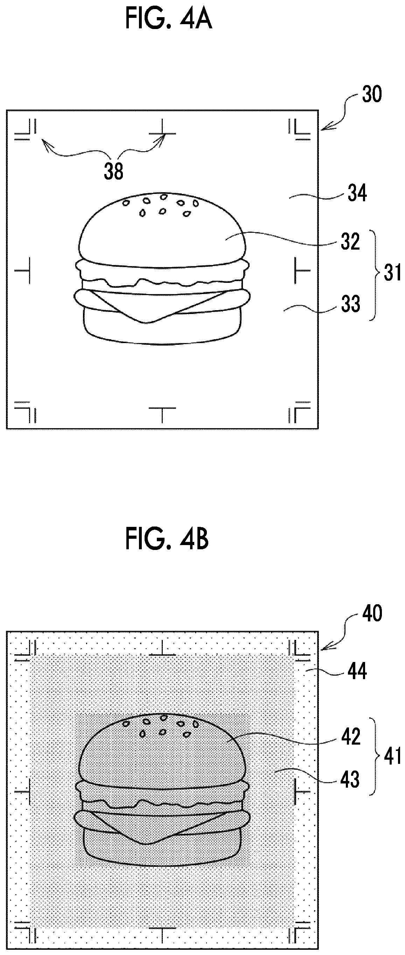

Fig. 4A shows another example of a completed state of the printed matter 30.

The final product of the printed matter 30 shown in Fig. 4A is a poster, a leaflet, or the like, and the outline of the final product is a square. In the printed matter 30, a cutting mark 38 that defines a cutting line is provided. That is, the printed matter 30 is cut at the portions corresponding to four sides. Portions that are cut and cut off are not used as the final product (poster, or the like).

In addition, the portion 31 that is used as the final product is divided into the portion 32 in which the image of the hamburger is printed and the portion 33 in which the image of the hamburger is not printed.

The inspection method for such printed matter 30 is also the same as described above.

That is, as shown in Fig. 4B, it is divided into the high level region 41 which is a region including the portion 31 that is used as the final product and the low level region 44 which is the other region. Then, the high level region 41 is inspected with higher accuracy than the low level region 44.

Furthermore, the high level region 41 is divided into the first high level region 42 which is a region including the particularly crucial portion 32 of the portion 31 that is used as the final product, and the second high level region 43 which is the other region. Then, the first high level region 42 is inspected with higher accuracy than the second high level region 43.

In Fig. 4B, an example in which both the high level region 41 and the first high level region 42 are rectangular regions.

### (Creation of Inspection Setting)

The setting creation unit 23 of the image forming apparatus 10 creates an inspection setting such that the above inspection method is executed in the inspection device 12.

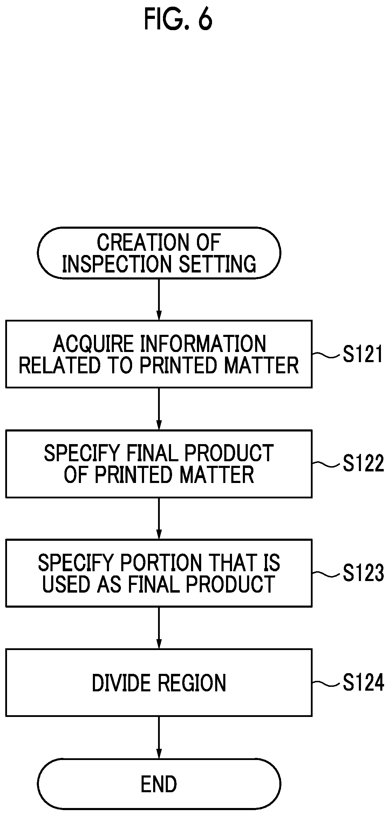

Fig. 6 shows a procedure to create an inspection setting.

In step S121, the setting creation unit 23 acquires information related to the printed matter.

In the present exemplary embodiment, the image forming apparatus 10 receives the input of information for manufacturing the printed matter (refer to step S110 in Fig. 5), so that the setting creation unit 23 acquires the information as information related to the printed matter.

In step S122, the setting creation unit 23 creates the inspection setting.

Setting basic information, which is information used for creating the inspection setting, includes information related to the printed matter. As described above, in the present exemplary embodiment, the information for manufacturing the printed matter is used as the information related to the printed matter, so that the information related to the printed matter here is information for manufacturing the printed matter (for example, a PDF file, a job setting, a workflow setting, and the like).

Specifically, the setting creation unit 23 specifies the final product related to the printed matter 30, based on the setting basic information. The final product can be specified based on the job setting or the workflow setting. The final product is, for example, a sticker, a point of purchase advertising (POP advertising), a poster, a leaflet, or the like. By specifying the final product, it is possible to determine whether the printed matter to be manufactured is a portion that is used as the final product or a portion other than the final product.

However, the final product may be specified only to the extent necessary for creating the inspection setting. In the present exemplary embodiment, it may be specified whether or not the final product has a free outline such as a sticker or a POP.

In a case where the final product has a free outline such as a sticker or a POP, the setting creation unit 23, determines that an inner portion of the outline 36 (slit, die-cut line, or the like) is a portion that is used as the final product and determines that an outer portion of the outline 36 is a portion that is not used as the final product.

In addition, in a case where the final product has a square outline such as a leaflet or a poster, the setting creation unit 23 determines that an inner portion of the cutting line defined by the cutting mark 38 is a portion that is used as the final product and determines that an outer portion of the cutting line is a portion that is not used as the final product.

In addition, in a case where the portion that is used as the final product includes a portion that is not printed, the setting creation unit 23 determines that the portion 32 in which the image is printed is a particularly crucial portion 32 of the portion that is used as the final product.

In step S124, the setting creation unit 23 divides the region.

Here, in the present exemplary embodiment, the region division means that the printed matter to be inspected is divided into the high level region 41 and the low level region 44, and the high level region 41 is further divided into the first high level region 42 and the second high level region 43.

The high level region 41 is set to include the entire portions used as the final product. The region other than the high level region 41 is the low level region 44.

Furthermore, the first high level region 42 is set to include the entire particularly crucial portion of the portion that is used as the final product. Of the high level region 41, the region other than the first high level region 42 is the second high level region 43.

Next, the operation and effect of the present exemplary embodiment will be described.

In the present exemplary embodiment, as shown in Fig. 7, the information processing system 10 includes a processor 13. The processor 13 acquires information related to the printed matter 30 (refer to Fig. 1A). In addition, the processor 13 creates an inspection setting, based on the setting basic information including information related to the printed matter 30, such that the high level region 41, which is a region including the portion 31 that is used as the final product, is inspected with higher accuracy than the low level region 44, which is the other region (refer to Figs. 1A to 4B).

For this reason, it is possible to reduce an inspection cost while suppressing a decrease in an inspection effect as compared with an aspect of inspecting the entire printed matter 30 with high accuracy. In a case where the inspection cost is high, for example, the performance of the inspection device or the storage capacity may be required. In addition, it may be necessary to lower the printing speed for printing. In the present exemplary embodiment, it is possible to address such a problem.

In addition, in the present exemplary embodiment, the processor 13 acquires information for manufacturing the printed matter 30.

For this reason, the setting basic information can include information for manufacturing the printed matter.

In addition, in the present exemplary embodiment, the setting basic information includes information for manufacturing the printed matter.

For this reason, it is easy to create the inspection setting as compared with a case where the setting basic information includes only the information obtained from the manufactured printed matter 30.

In addition, in the present exemplary embodiment, as shown in Figs. 1A, 1B, 3A, and 3B, the high level region 41 is a region having an outer edge along an outer edge 36 of the portion 31 that is used as the final product.

For this reason, it is possible to increase an area of the low level region as compared with a case where the high level region 41 is a rectangular region including the entire portion 31 that is used as the final product.

In addition, as shown in Figs 2A, 2B, 4A, and 4B, the high level region 41 may be a rectangular region including the entire portion 31 that is used as the final product.

In this case, it is possible to simplify the inspection method as compared with a case where the high level region 41 is a region having an outer edge along the outer edge 36 of the portion 31 that is used as the final product.

In addition, in the present exemplary embodiment, the inspection setting is set such that the first high level region 42, which is a region including a particularly crucial portion 32 of the portion 31 that is used as the final product in the high level region 41, is inspected with higher accuracy than the second high level region 43, which is the other region of the high level region 41 (refer to Figs. 1A to 4B).

For this reason, it is possible to reduce the inspection cost while suppressing a decrease in the inspection effect as compared with a case of inspecting the entire high level region 41 with the same accuracy.

In addition, in the present exemplary embodiment, as shown in Figs. 1A, 1B, 3A, and 3B, the first high level region 42 is a region having an outer edge along an outer edge of the particularly crucial portion 32 of the portion 31 that is used as the final product.

For this reason, it is possible to increase an area of the second high level region 43 as compared with a case where the first high level region 42 is a rectangular region including the entire particularly crucial portion 32 of the portion 31 that is used as the final product.

In addition, as shown in Figs 2A, 2B, 4A, and 4B, the first high level region 42 may be a rectangular region including the entire particularly crucial portion 32 of the portion 31 that is used as the final product.

In this case, it is possible to simplify the inspection method as compared with a case where the first high level region 42 is a region having an outer edge along an outer edge of the particularly crucial portion 32 of the portion 31 that is used as the final product.

In addition, in the present exemplary embodiment, as shown in Fig. 6, in the creation of the inspection setting, the final product related to the printed matter 30 is specified, and in a case where the final product is a sticker, a determination is made that the inner portion 31 of the slit 36 in the printed matter 30 is a portion that is used as the final product, and that the outer portion 34 of the slit 36 is a portion that is not used as the final product.

For this reason, in a case where the final product related to the printed matter 30 is a sticker, an appropriate inspection setting can be created.

In addition, in the present exemplary embodiment, the inspection setting is set such that the first high level region 42, which is a region including a particularly crucial portion 32 of the portion 31 that is used as the final product in the high level region 41, is inspected with higher accuracy than the second high level region 43, which is the other region of the high level region 41. In the creation of the inspection setting, in a case where the final product is a sticker, in a case where the inner portion 31 of the slit 36 in the printed matter 30 includes a portion 32 in which an image is formed and a portion 33 in which an image is not formed, it is determined that the portion 32 in which the image is formed is a particularly crucial portion 32.

For this reason, in a case where the final product related to the printed matter 30 is a sticker, a more appropriate inspection setting can be created.

In addition, in the present exemplary embodiment, as shown in Fig. 5, the processor 13 receives input of information for manufacturing the printed matter 30, manufactures the printed matter 30 based on the information for manufacturing the printed matter 30, and inspects the manufactured printed matter 30 based on the created inspection setting.

For this reason, the information processing system 10 can manufacture and inspect the printed matter 30.

### [Supplementary Description]

As described above, although the exemplary embodiments of the present invention have been described, the present invention is not limited to the exemplary embodiments, and various modifications, changes, and improvements are possible without departing from the technical spirit of the present invention.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device). In the embodiments above, the term "processor" is broad enough to encompass one processor or plural processors in collaboration which are located physically apart from each other but may work cooperatively. The order of operations of the processor is not limited to one described in the embodiments above, and may be changed.

In the above exemplary embodiment, the information processing system is the image forming apparatus 10, and includes the printing device 11 and the inspection device 12. However, the information processing system of the present disclosure is not limited to this, and the information processing system may not include the printing device 11 and the inspection device 12.

The information processing system may be realized by a cloud server and may be connected to a printing device and an inspection device via the Internet.

In addition, the term "system" in the present disclosure includes both a system configured by a plurality of devices and a system configured by a single device.

In the above exemplary embodiment, "information related to the printed matter" included in the setting basic information is information for manufacturing the printed matter (for example, image data, workflow setting, or the like). However, the information related to the printed matter of the present disclosure may not include information for manufacturing the printed matter, and may be information obtained from the manufactured printed matter (for example, information obtained by scanning the printed matter).

In this case, for example, the type of job and the content of the printed matter may be specified based on the information obtained by scanning the printed matter 30 in the inspection device 12, and information necessary for creating the inspection setting (regional division) may be obtained. In this case, machine learning or the like may be used.

### [Supplementary Note]

(((1))) An information processing system comprising:
   a processor configured to:
   acquire information related to a printed matter; and
   create an inspection setting, based on setting basic information including the information related to the printed matter, such that a high level region, which is a region including a portion that is used as a final product, is inspected with higher accuracy than a low level region which is the other region.
(((2))) The information processing system according to (((1))),
   wherein the processor is configured to:
   acquire information for manufacturing the printed matter.
(((3))) The information processing system according to (((1))) or (((2))),
   wherein the setting basic information includes information for manufacturing the printed matter.
(((4))) The information processing system according to any one of (((1))) to (((3))),
   wherein the high level region is a region having an outer edge along an outer edge of the portion that is used as the final product.
(((5))) The information processing system according to any one of (((1))) to (((3))),
   wherein the high level region is a rectangular region including an entire portion that is used as the final product.
(((6))) The information processing system according to any one of (((1))) to (((5))),
   wherein the inspection setting is a setting such that a first high level region, which is a region including a particularly crucial portion of the portion that is used as the final product of the high level region, is inspected with higher accuracy than a second high level region, which is the other region of the high level region.
(((7))) The information processing system according to (((6))),
   wherein the first high level region is a region having an outer edge along an outer edge of the particularly crucial portion of the portion that is used as the final product.
(((8))) The information processing system according to (((6))),
   wherein the first high level region is a rectangular region including an entire particularly crucial portion of the portion that is used as the final product.
(((9))) The information processing system according to any one of (((1))) to (((3))),
   wherein in the creation of the inspection setting,
   a final product related to the printed matter is specified, and
   in a case where the final product is a sticker, a determination is made that an inner portion of a slit in the printed matter is the portion that is used as the final product, and that an outer portion of the slit is a portion that is not used as the final product.
(((10))) The information processing system according to (((9))),
   wherein the inspection setting is a setting such that a first high level region, which is a region including a particularly crucial portion of the portion that is used as the final product of the high level region, is inspected with higher accuracy than a second high level region, which is the other region of the high level region, and
   in the creation of the inspection setting,
   in a case where the final product is a sticker and in a case where the inner portion of the slit in the printed matter includes a portion in which an image is formed and a portion in which the image is not formed, a determination is made that the portion in which the image is formed is the particularly crucial portion.
(((11))) The information processing system according to any one of (((1))) to (((10))),
   wherein the processor is configured to:
   receive input of information for manufacturing the printed matter; manufacture the printed matter based on the information for manufacturing the printed matter; and
   inspect the manufactured printed matter based on the created inspection setting.
(((12))) A program causing a processor to execute a process comprising:
   acquiring information related to a printed matter; and
   creating an inspection setting, based on setting basic information including the information related to the printed matter, such that a high level region, which is a region including a portion that is used as a final product, is inspected with higher accuracy than a low level region which is the other region.

With the aspect (((1))), it is possible to reduce an inspection cost while suppressing a decrease in an inspection effect as compared with an aspect of inspecting the entire printed matter with high accuracy.

With the aspect (((2))), the setting basic information can include information for manufacturing the printed matter.

With the aspect (((3))), it is easy to create the inspection setting as compared with a case where the setting basic information includes only the information obtained from the manufactured printed matter.

With the aspect (((4))), it is possible to increase an area of the low level region as compared with a case where the high level region is a rectangular region including the entire portion that is used as the final product.

With the aspect (((5))), it is possible to simplify the inspection method as compared with a case where the high level region is a region having an outer edge along the outer edge of the portion that is used as the final product.

With the aspect (((6))), it is possible to reduce the inspection cost while suppressing a decrease in the inspection effect as compared with a case of inspecting the entire high level region with the same accuracy.

With the aspect (((7))), it is possible to increase an area of the second high level region as compared with a case where the first high level region is a rectangular region including the entire particularly crucial portion of the portion that is used as the final product.

With the aspect (((8))), it is possible to simplify the inspection method as compared with a case where the first high level region is a region having an outer edge along an outer edge of the particularly crucial portion of the portion that is used as the final product.

With the aspect (((9))), in a case where the final product related to the printed matter is a sticker, it is possible to create the inspection setting with the slit as a reference.

With the aspect (((10))), in a case where the final product related to the printed matter is a sticker, it is possible to further reduce the inspection cost.

With the aspect (((11))), it is possible to manufacture and inspect the printed matter by the information processing system.

With the aspect (((12))), it is possible to reduce an inspection cost while suppressing a decrease in an inspection effect as compared with an aspect of inspecting the entire printed matter with high accuracy.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

10: image forming apparatus (information processing system)
11: printing device
12: inspection device
13: processor
14: memory
14A: program
21: reception unit
22: printing control unit
23: setting creation unit
24: inspection control unit
30: printed matter
31: portion that is used as final product
32: particularly crucial portion of portion that is used as final product
34: portion that is not used as the final product
36: slit (outline)
38: cutting mark
41: high level region
42: first high level region
43: second high level region
44: low level region

## Claims

1. An information processing system comprising:
a processor configured to:
acquire information related to a printed matter; and
create an inspection setting, based on setting basic information including the information related to the printed matter, such that a high level region, which is a region including a portion that is used as a final product, is inspected with higher accuracy than a low level region which is the other region.

2. The information processing system according to claim 1,
wherein the processor is configured to:
acquire information for manufacturing the printed matter.

3. The information processing system according to claim 1 or 2,
wherein the setting basic information includes information for manufacturing the printed matter.

4. The information processing system according to any one of claims 1 to 3,
wherein the high level region is a region having an outer edge along an outer edge of the portion that is used as the final product.

5. The information processing system according to any one of claims 1 to 3,
wherein the high level region is a rectangular region including an entire portion that is used as the final product.

6. The information processing system according to any one of claims 1 to 5,
wherein the inspection setting is a setting such that a first high level region, which is a region including a particularly crucial portion of the portion that is used as the final product of the high level region, is inspected with higher accuracy than a second high level region, which is the other region of the high level region.

7. The information processing system according to claim 6,
wherein the first high level region is a region having an outer edge along an outer edge of the particularly crucial portion of the portion that is used as the final product.

8. The information processing system according to claim 6,
wherein the first high level region is a rectangular region including an entire particularly crucial portion of the portion that is used as the final product.

9. The information processing system according to any one of claims 1 to 3,
wherein in the creation of the inspection setting,
a final product related to the printed matter is specified, and
in a case where the final product is a sticker, a determination is made that an inner portion of a slit in the printed matter is the portion that is used as the final product, and that an outer portion of the slit is a portion that is not used as the final product.

10. The information processing system according to claim 9,
wherein the inspection setting is a setting such that a first high level region, which is a region including a particularly crucial portion of the portion that is used as the final product of the high level region, is inspected with higher accuracy than a second high level region, which is the other region of the high level region, and
in the creation of the inspection setting,
in a case where the final product is a sticker and in a case where the inner portion of the slit in the printed matter includes a portion in which an image is formed and a portion in which the image is not formed, a determination is made that the portion in which the image is formed is the particularly crucial portion.

11. The information processing system according to any one of claims 1 to 10,
wherein the processor is configured to:
receive input of information for manufacturing the printed matter;
manufacture the printed matter based on the information for manufacturing the printed matter; and
inspect the manufactured printed matter based on the created inspection setting.

12. A program causing a processor to execute a process comprising:
acquiring information related to a printed matter; and
creating an inspection setting, based on setting basic information including the information related to the printed matter, such that a high level region, which is a region including a portion that is used as a final product, is inspected with higher accuracy than a low level region which is the other region.

13. An information processing method comprising:
acquiring information related to a printed matter; and
creating an inspection setting, based on setting basic information including the information related to the printed matter, such that a high level region, which is a region including a portion that is used as a final product, is inspected with higher accuracy than a low level region which is the other region.
